(19) Europäisches Patentamt
European Patent Office
Office européen des brevets

(11) **EP 4 151 339 A1**

(12) **EUROPÄISCHE PATENTANMELDUNG**

(43) Veröffentlichungstag:
**22.03.2023 Patentblatt 2023/12**

(21) Anmeldenummer: **21197566.9**

(22) Anmeldetag: **17.09.2021**

(51) Internationale Patentklassifikation (IPC):
**B22F 5/06** *(2006.01)* **B22F 10/36** *(2021.01)*
**B33Y 10/00** *(2015.01)* **B33Y 50/02** *(2015.01)*
**B22F 10/28** *(2021.01)* **F16B 37/12** *(2006.01)*
**B22F 10/38** *(2021.01)*

(52) Gemeinsame Patentklassifikation (CPC):
**F16B 37/12; B22F 5/06; B22F 10/28; B22F 10/36;**
**B22F 10/385; B29C 64/153; B29C 64/386;**
**B33Y 10/00; B33Y 50/02; B33Y 80/00**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Böllhoff Verbindungstechnik GmbH**
**33649 Bielefeld (DE)**

(72) Erfinder:
• **DRAHT, Torsten**
**33758 Schloß Holte-Stukenbrock (DE)**
• **MOEHRING, Jörg**
**33106 Paderborn (DE)**
• **BRAND, Michael**
**33014 Bad Driburg (DE)**
• **TRIENENS, Dorte**
**33098 Paderborn (DE)**

(74) Vertreter: **HWP Intellectual Property**
**Ridlerstraße 35**
**80339 München (DE)**

Bemerkungen:
Geänderte Patentansprüche gemäss Regel 137(2)
EPÜ.

(54) **ADDITIV HERGESTELLTES BAUTEIL MIT EINSATZGEWINDE, HERSTELLUNGSVERFAHREN DAFÜR SOWIE BAUTEIL MIT DRAHTGEWINDEEINSATZ INSTALLIERT IM EINSATZGEWINDE**

(57)   Ein additives Herstellungsverfahren eines Bauteils 10 mit einer Gewindeöffnung 12 und einem an deren radialer Innenwand angeordneten Einsatzgewinde 16, welches an einen zu einer Gewindeverstärkung aufzunehmenden Drahtgewindeeinsatz 30 angepasst ist, um aus Einsatzgewinde 16 und Drahtgewindeeinsatz 30 ein Standardgewinde zu bilden, weist die folgenden Schritte auf: Bereitstellen einer dreidimensionalen Bauteilzeichnung mit der Gewindeöffnung 12 und dem darin angeordneten Einsatzgewinde 16 (S1), welches definiert ist durch

$$D_{HC} \geq D_{HC\,min} = d + 0{,}75 \times \frac{P}{\tan\left(\frac{\alpha}{2}\right)}$$

$$D_{1HC} \geq D_{1HC\,min} = d + 0{,}125 \times \frac{P}{\tan\left(\frac{\alpha}{2}\right)}$$

$$D_{1HC} \leq D_{1HC\,max} = d + 0{,}125 \times \frac{P}{\tan\left(\frac{\alpha}{2}\right)} + 0{,}373 \times P - 0{,}192 \times P^{1,21}$$

$$P_{HC} = \left(D_{HC\,min} - D_{1HC\,min}\right) \times 1{,}6 \times \tan\left(\frac{\alpha}{2}\right)$$

**(Forts. nächste Seite)**

mit

d

Nenndurchmesser des im Einsatzgewinde mit Drahtgewindeeinsatz aufzunehmenden Schraubengewindes

α Flankenwinkel des im Einsatzgewinde mit Drahtgewindeeinsatz aufzunehmenden Schraubengewindes

P Steigung des im Einsatzgewinde mit Drahtgewindeeinsatz aufzunehmenden Schraubengewindes

$D_{HC}$

Nenndurchmesser des Einsatzgewindes

$D_{HC\ min}$

kleinster Nenndurchmesser des Einsatzgewindes

$D_{1HC}$

Kerndurchmesser des Einsatzgewindes

$D_{1HC\ min}$

kleinster Kerndurchmesser des Einsatzgewindes

$D_{1HC\ max}$

größter Kerndurchmesser des Einsatzgewindes

$P_{HC}$

Steigung des Einsatzgewindes

Anpassen S2, S3, S4, S5 von Abmessungen des Einsatzgewindes 16 mit Hilfe von Korrekturfaktoren an die additive Herstellung, Umwandeln der dreidimensionalen Bauteilzeichnung mit den angepassten Abmessungen in ein Schichtmodell für die additive Herstellung S5 und additives Herstellen des dreidimensionalen Bauteils S6.

**Beschreibung**

1. Gebiet der Erfindung

Vorliegende Erfindung betrifft verschiedene Alternativen eines additiven Herstellungsverfahrens eines Bauteils mit einer Gewindeöffnung und einem an deren radialer Innenwand angeordneten Einsatzgewinde, welches an einen zu einer Gewindeverstärkung aufzunehmenden Drahtgewindeeinsatz angepasst ist, um gemeinsam ein Standardgewinde zu bilden. Des Weiteren betrifft vorliegende Erfindung ein additiv hergestelltes Bauteil mit Gewindeöffnung und einem in dieser Gewindeöffnung angeordneten Einsatzgewinde, in welchem ein Drahtgewindeeinsatz installiert ist. Zudem betrifft vorliegende Erfindung eine Bauteilverbindung aus dem oben beschriebenen additiv gefertigten Bauteil mit Bauteilöffnung und Einsatzgewinde mit Drahtgewindeeinsatz, welches mit einem zweiten Bauteil mit einer Durchgangsöffnung durch eine diese verbindende Schraube verbunden ist.

2. Hintergrund der Erfindung

Die additive Fertigungstechnologie (auch Additiv Manufacturing genannt, kurz AM) bietet aufgrund des schichtweisen Schmelzprozesses von Kunststoff- oder metallischen Materialien eine große Designfreiheit bei der Herstellung von Gegenständen. Der Schichtaufbau bzw. die Schichtstärke eines jeden AM-Bauteils beeinflussen jedoch die Oberflächenqualität sowie die Maßhaltigkeit bei filigranen Strukturen und krummlinigen Formen.

AM Gewinde können zwar gefertigt, müssen jedoch nachgearbeitet werden, um die erforderliche Passgenauigkeit für einen Gewindepartner zu erzielen. Die Nachbearbeitung, bei der das Gewinde mittels spanender Verfahren nachgeschnitten wird, verursacht zusätzliche Kosten und verlangsamt den Produktionsprozess.

Bei schwer zerspanbaren Werkstoffen, wie z.B. Nickelbasislegierungen oder Titan, ist das Einbringen von Gewinden oft nur mit erheblichem Zusatzaufwand möglich. In einigen Branchen, wie z.B. in der Medizin-, Luft- und Raumfahrttechnik, sind die bei der konventionellen Gewindefertigung eingesetzten Kühl- und Schmierstoffe sowie die dabei entstehenden Späne nicht erwünscht. Diese Betriebsmittel und Materialrückstände müssen nachträglich aufwändig entfernt werden.

DE 10 2017 126 624 A1 beschreibt im Rahmen der generativen bzw. additiven Fertigung die Auswirkungen des generativen Fertigungsprozesses auf oberflächennahe Bereiche eines Bauteils. Diese auch als Hülle (oder Skin) bezeichneten Bereiche umfassen Bereiche an der Oberseite, an der Unterseite und an den Seiten eines Werkstücks. Die oberflächennahen Bereiche werden als Upskin-Bereiche (Hüllenbereiche auf der Einfallsseite des Laserstrahls), Downskin-Bereiche (Hüllenbereiche auf der dem Laserstrahleinfall abgewandten Seite) und Sideskin-Bereiche (Hüllenbereiche, die sich im Wesentlichen entlang der Laserstrahlrichtung erstrecken) bezeichnet. Ein Downskin-Bereich des Bauteils erstreckt sich allgemein dort, wo der entstehende Bauteilabschnitt in Laserstrahlrichtung auf Pulver erzeugt wird. Ein Upskin-Bereich des Bauteils wird in nachfolgenden Beschichtungsprozessen mit Pulver bedeckt, das nicht bestrahlt wird. Ein Upskin-Bereich bildet üblicherweise eine Oberfläche des Bauteils auf der Seite des Laserstrahleinfalls. Ein Downskin-Bereich erstreckt sich beispielsweise entlang der Unterseite des Werkstücks, hier im Sinne der ersten bestrahlten Lagen, oder entlang der Unterseite eines Überhangbereichs des Bauteils. Ein Sideskin-Bereich stellt einen seitlichen Rand des Bauteils dar, der durch das laterale Ausmaß der Bestrahlung in der Schichtebene gegeben ist. Entsprechend grenzt er seitlich an unbestrahltes Pulver an. Die Hüllenbereiche umschließen den inneren Bereich des Bauteils oder eines Abschnitts desselben. Dieser wird oft auch als Kern (oder Core) des Bauteils bezeichnet. In der allgemeinen Betrachtung der DE 10 2017 126 624 A1 fehlt es aber an der konkreten praktischen Umsetzung in realen Geometrien. Daher ist nicht erkennbar, auf welche tatsächlichen Geometrien mit welcher Materialwahl das vorgeschlagene Verfahren anwendbar ist und welche Vor- und Nachteile sowie Vorgehensweisen damit verbunden sind.

EP 3 225 334 B1 beschreibt ein Verfahren zum additiven Herstellen zumindest eines Bauteilbereichs eines Bauteils. Es wurde erkannt, dass zumindest ein Belichtungsparameter des Lasers in Abhängigkeit eines Einstrahlwinkels des Lasers zur Oberfläche der Bauteilschicht als Bauparameter eingestellt wird. In diesem Zusammenhang wird optional weiter empfohlen, dass in Abhängigkeit wenigstens eines weiteren Bauparameters aus der Gruppe Bauteildicke, Hatchabstand zu einer benachbarten Belichtungsspur, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht eingestellt werden.

Im Hinblick auf die im Stand der Technik bekannten additiven Herstellungsverfahren ist es die Aufgabe vorliegender Erfindung, ein konkretes additives Herstellungsverfahren eines additiv gefertigten Bauteils mit Einsatzgewinde bereitzustellen.

3. Zusammenfassung der Erfindung

Die obige Aufgabe wird gelöst durch ein additives Herstellungsverfahren eines Bauteils mit einer Gewindeöffnung gemäß den unabhängigen Patentansprüchen 1 und 8, durch ein Herstellungsverfahren eines additiv gefertigten Bauteils mit Drahtgewindeeinsatz gemäß Patentanspruch 12 sowie durch ein additiv gefertigtes Bauteil gemäß Patentanspruch 14 und eine Bauteilverbindung gemäß Patentanspruch 16. Vorteilhafte Ausführungsformen und Weiterentwicklungen vorliegender Erfindung ergeben sich aus der nachfolgenden Beschreibung, den Zeichnungen sowie den anhängenden Patentansprüchen.

Vorliegende Erfindung offenbart ein additives Herstellungsverfahren eines Bauteils mit einer Gewindeöffnung und einem an deren radialer Innenwand angeordneten Einsatzgewinde, welches an einen zu einer Gewindeverstärkung aufzunehmenden Drahtgewindeeinsatz angepasst ist, um aus Einsatzgewinde und Drahtgewindeeinsatz ein Standardgewinde zu bilden. Das Herstellungsverfahren weist die folgenden Schritte auf: S1) Bereitstellen einer dreidimensionalen Bauteilzeichnung des Bauteils mit der Gewindeöffnung und dem darin angeordneten Einsatzgewinde, welches insbesondere definiert ist durch

$$D_{HC} \geq D_{HC\,min} = d + 0{,}75 \times \frac{P}{\tan\left(\frac{\alpha}{2}\right)}$$

$$D_{1HC} \geq D_{1HC\,min} = d + 0{,}125 \times \frac{P}{\tan\left(\frac{\alpha}{2}\right)}$$

$$D_{1HC} \leq D_{1HC\,max} = d + 0{,}125 \times \frac{P}{\tan\left(\frac{\alpha}{2}\right)} + 0{,}373 \times P - 0{,}192 \times P^{1,21}$$

$$P_{HC} = \left(D_{HC\,min} - D_{1HC\,min}\right) \times 1{,}6 \times \tan\left(\frac{\alpha}{2}\right)$$

mit

| | |
|---|---|
| d | Nenndurchmesser des aufzunehmenden Schrauben- bzw. Außengewindes |
| α | Flankenwinkel des aufzunehmenden Schrauben- bzw. Außengewindes |
| P | Steigung des aufzunehmenden Schrauben- bzw. Außengewindes |
| $D_{HC}$ | Nenndurchmesser des Einsatzgewindes |
| $D_{HC\,min}$ | kleinster Nenndurchmesser des Einsatzgewindes |
| $D_{1HC}$ | Kerndurchmesser des Einsatzgewindes |
| $D_{1HC\,min}$ | kleinster Kerndurchmesser des Einsatzgewindes |
| $D_{1HC\,max}$ | größter Kerndurchmesser des Einsatzgewindes |
| $P_{HC}$ | Steigung des Einsatzgewindes |

S2) Anpassen von Abmessungen des Einsatzgewindes mit Hilfe von Korrekturfaktoren an die additive Herstellung, S3) Umwandeln der dreidimensionalen Bauteilzeichnung mit den angepassten Abmessungen in ein Schichtmodell für die additive Herstellung und S4) additives Herstellen des dreidimensionalen Bauteils.

Bei der Herstellung additiv gefertigter Bauteile hat sich gezeigt, dass sich bekannte Geometrien von Standardgewinden nur mit praktisch nicht akzeptablen geometrischen Abweichungen fertigen lassen. Dieser Nachteil lässt sich dadurch ausgleichen, indem, an Stelle eines Standardgewindes als Innen- oder Außengewinde direkt im Bauteil vorzusehen, ein Einsatzgewinde für einen Drahtgewindeeinsatz im Bauteil additiv gefertigt wird. Ein Einsatzgewinde weist einen größeren Nenndurchmesser und damit auch größere geometrische Toleranzen als ein Standardgewinde, insbesondere ein Standard-Innengewinde oder ein Standard-Außengewinde, auf. Größere Toleranzen wiederum ermöglichen eine höhere Genauigkeit der additiven Fertigung des Bauteils. Damit bilden ein additiv gefertigtes Einsatzgewinde in Kombination mit einem Drahtgewindeeinsatz ein praktisch nutzbares Standardgewinde für ein Innengewinde oder ein Außengewinde, je nach Anwendungsfall.

Obiges erfindungsgemäß bevorzugtes additives Herstellungsverfahren für ein Bauteil erzeugt vorzugsweise ein Einsatzgewinde in Form eines Innengewindes an der radialen Innenseite der Bauteil- bzw. Gewindeöffnung. Die konstruktive Gestaltung und Dimensionierung des Innen-Einsatzgewindes basiert auf einem Außen- oder Bolzengewinde, welches später in die Kombination aus additiv hergestelltem Innen-Einsatzgewinde und darin positioniertem Drahtgewindeeinsatz einschraubbar und darin befestigbar sein soll.

Um geometrische Abweichungen bei der additiven Fertigung als Einsatzgewinde zu reduzieren, werden vorgegebene geometrische Abmessungen angepasst. Gemäß einer bevorzugten Ausgestaltung des Herstellungsverfahrens erfolgt das Anpassen der Abmessungen des Einsatzgewindes durch Aufweiten des Nenndurchmessers $D_{HC}$, des Kerndurchmessers $D_{1HC}$, des Flankenwinkels $\alpha_{HC}$ und der Steigung $P_{HC}$.

Im Hinblick auf das Anpassen der Abmessungen ist es weiterhin bevorzugt, dass das Anpassen des Nenndurchmessers $D_{HC}$ auf einen additiven Nenndurchmesser $D_{AM}$, das Anpassen des Kerndurchmessers $D_{1HC}$ auf einen additiven Kerndurchmesser $D_{1AM}$, das Anpassen des Flankenwinkels $\alpha_{HC}$ auf einen additiven Flankenwinkel $\alpha_{AM}$ und das Anpassen der Steigung $P_{HC}$ auf eine additive Steigung $P_{AM}$ auf Grundlage folgender Gleichungen erfolgt:

$$D_{AM} = D_{HC} * \delta$$

$$D_{1AM} = D_{1HC} * \delta_1$$

$$\alpha_{AM} = \alpha_{HC} * \delta_\alpha$$

$$P_{AM} = P_{HC} * \delta_P$$

wobei $\delta$, $\delta_1$, $\delta_\alpha$, $\delta_P$ Korrekturfaktoren für den Nenndurchmesser, den Kerndurchmesser, den Flankenwinkel und die Steigung sind.

Zur Durchführung obiger Anpassung wurde es als vorteilhaft erkannt, wenn die Korrekturfaktoren auf bestimmte bevorzugte Wertebereiche beschränkt sind. Diese sind in folgender Tabelle zusammengefasst:

| Korrekturfaktor: | Wertebereich: |
|---|---|
| $\delta$ | 1,04 - 1,25 |
| $\delta_1$ | 1,04 - 1,25 |
| $\delta_\alpha$ | 1,04 - 1,25 |
| $\delta_P$ | 1,04 - 1,25 |

In bekannten Industriestandards für bspw. Europa oder die USA, die hinten näher genannt sind, Gewindegeometrien definiert. Diese geben vor, welche Gewindegeometrie in einer Gewindeöffnung in Kombination mit einem Drahtgewindeeinsatz bereitgestellt werden muss, um mit Gewindebolzen unterschiedlicher Industriestandards verbindbar zu sein. In diesem Zusammenhang hat es sich als vorteilhaft und erfindungsgemäß bevorzugt erwiesen, unterschiedliche Korrekturfaktoren für metrische Gewinde sowie für in den USA und Großbritannien genutzte zöllige Gewinde zu bestimmen.

Gemäß einer bevorzugten Ausführungsform des Herstellungsverfahrens sind für metrische Gewinde mit $\alpha=60$° die obigen Gleichungen für d=2; 2,5; 3; 3,5; 4; 4,5; 5; 6; 7; 8; 9; 10; 11; 12; 14; 16; 18; 20 [mm] anwendbar.

Weiter bevorzugt sind für metrische Gewinde mit $\alpha=60$° die obigen Gleichungen für P=0,45; 0,5; 0,6; 0,7; 0,75; 0,8; 1; 1,25; 1,5; 1,75; 2; 2,5; 3 [mm] anwendbar.

Anknüpfend an das oben Gesagte ist das additive Herstellungsverfahren bevorzugt ebenfalls anwendbar auf ein Bauteil mit einem zölligen Einsatzgewinde. Für zöllige Gewinde mit $\alpha=60$°sind die obigen Gleichungen für d= 0,086; 0,099; 0,112; 0,125; 0,138; 0,164; 0,19; 0,216; 0,25; 0,3125; 0,375; 0,4375; 0,5; 0,5625; 0,625; 0,75; 0,875 [inch] anwendbar.

Eine Kombination der obigen Werte für den Nenndurchmesser und die Steigung ergeben sich aus den bekannten Industriestandards für Gewindegeometrien. Daher müssen sie an dieser Stelle nicht wiederholt werden.

Vorliegende Erfindung offenbart zudem ein additives Herstellungsverfahren eines Bauteils mit einer Gewindeöffnung und einem an deren radialer Innenwand angeordneten Einsatzgewinde, welches an einen zu einer Gewindeverstärkung aufzunehmenden Drahtgewindeeinsatz angepasst ist, um aus Einsatzgewinde und Drahtgewindeeinsatz ein Standardgewinde zu bilden. Das Herstellungsverfahren weist die folgenden Schritte auf: S1) Bereitstellen einer dreidimensionalen Bauteilzeichnung mit der Gewindeöffnung und dem darin angeordneten Einsatzgewinde, welches definiert ist durch S2) Auswählen von Geometriebereichen des Einsatzgewindes in der Bauteilzeichnung, welches insbesondere definiert ist durch

$$D_{HC} \geq D_{HC\ min} = d + 0{,}75 \times \frac{P}{\tan\left(\frac{\alpha}{2}\right)}$$

$$D_{1HC} \geq D_{1HC\ min} = d + 0{,}125 \times \frac{P}{\tan\left(\frac{\alpha}{2}\right)}$$

$$D_{1HC} \leq D_{1HC\ max} = d + 0{,}125 \times \frac{P}{\tan\left(\frac{\alpha}{2}\right)} + 0{,}373 \times P - 0{,}192 \times P^{1{,}21}$$

$$P_{HC} = (D_{HC\ min} - D_{1HC\ min}) \times 1{,}6 \times \tan\left(\frac{\alpha}{2}\right)$$

mit

| | |
|---|---|
| d | Nenndurchmesser des aufzunehmenden Schraubenbzw. Außengewindes |
| $\alpha$ | Flankenwinkel des aufzunehmenden Schrauben- bzw. Außengewindes |
| P | Steigung des aufzunehmenden Schrauben- bzw. Außengewindes |
| $D_{HC}$ | Nenndurchmesser des Einsatzgewindes |
| $D_{HC\ min}$ | kleinster Nenndurchmesser des Einsatzgewindes |
| $D_{1HC}$ | Kerndurchmesser des Einsatzgewindes |
| $D_{1HC\ min}$ | kleinster Kerndurchmesser des Einsatzgewindes |
| $D_{1HC\ max}$ | größter Kerndurchmesser des Einsatzgewindes |
| $P_{HC}$ | Steigung des Einsatzgewindes |

S3) Umwandeln der dreidimensionalen Bauteilzeichnung mit den ausgewählten Geometriebereichen in ein Schichtmodell für die additive Herstellung und S4) additives Herstellen des dreidimensionalen Bauteils mit Einsatzgewinde, insbesondere aus einer Aluminiumlegierung, wobei die ausgewählten Geometriebereiche des Einsatzgewindes mit einer anderen Streckenenergie eines Lasers als die anderen Bereiche des Bauteils aufgeschmolzen werden und sich die Streckenenergie des Lasers ergibt aus

$$E_S = \frac{P_L}{v_s}$$

mit $E_s$ = Streckenenergie des Lasers, $P_L$ = Laserleistung und $v_S$ = Scangeschwindigkeit des Lasers.
Gemäß einer Herstellungsalternative eines additiv gebildeten Bauteils mit Einsatzgewinde in einer Bauteilöffnung wird anstelle der Nutzung geometrischer Korrekturfaktoren in der Festlegung der herzustellenden Geometrie des Einsatzgewindes gezielt die Streckenenergie des Lasers in bestimmten ausgewählten Geometriebereichen unterschiedlich eingestellt. Zu diesem Zweck werden zu verfestigende Geometriebereiche, die vom einfallenden Laserstrahl abgewandt sind und jene, die dem einfallenden Laserstrahl zugewandt sind, unterschiedlich stark durch verfestigende Streckenenergie des Lasers beaufschlagt.
Erfindungsgemäß bevorzugt strahlt der Laser in einer Einstrahlrichtung auf zu verfestigendes Material ein, wobei die weiteren Schritte vorgesehen sind: Auswählen von Downskin-Gewindeflächen des Einsatzgewindes, die der Einstrahlrichtung abgewandt sind, und Reduzieren der durch den Laser auf das zu verfestigende Pulver aufgebrachten Streckenenergie Es.
Gemäß einer weiteren bevorzugten Ausgestaltung des erfindungsgemäßen Herstellungsverfahrens weist dieses den weiteren Schritt auf: Reduzieren der Streckenenergie des Lasers durch Reduzieren der Laserleistung und/oder durch Erhöhen der Scangeschwindigkeit. Es hat sich als vorteilhaft erwiesen, die Streckenenergie des Lasers bei Downskin-Gewindeflächen des Einsatzgewindes zu reduzieren. Dies erfolgt bevorzugt gemäß folgender Gleichung

$$E_{S,down} = \frac{P_L \times \delta_L}{V_s}$$

, indem die Laserleistung $P_L$ mit Hilfe eines Korrekturfaktors von $0{,}7 \leq \delta_L \leq 0{,}99$ verändert wird.

Vorliegende Erfindung offenbart zudem ein Herstellungsverfahren eines additiv gefertigten Bauteils mit einem Drahtgewindeeinsatz, das die folgenden Schritte umfasst: Bereitstellen eines additiv gefertigten Bauteils mit einem Einsatzgewinde gemäß einem der vorhergehenden Alternativen und Ausführungsformen, insbesondere mit $D_{1HC} \geq d + 0{,}46 \times P$, und Eindrehen eines Drahtgewindeeinsatzes in das Einsatzgewinde des additiv gefertigten Bauteils, wodurch der Durchmesser des Drahtgewindeeinsatzes reduziert und vorzugsweise ein Standardgewinde im Bauteil gebildet wird.

Vorzugsweise wird in einem weiteren Verfahrensschritt eine Schraube mit einem Kerndurchmesser d durch eine Durchgangsbohrung des additiv gefertigten Bauteils in den Drahtgewindeeinsatz im Einsatzgewinde eingeschraubt.

Des Weiteren offenbart vorliegende Erfindung ein additiv gefertigtes Bauteil mit einer Bauteilöffnung und einem an einer Innenwand der Bauteilöffnung angeordneten Einsatzgewinde, in dem ein Drahtgewindeeinsatz angeordnet ist, insbesondere ein additiv gefertigtes Bauteil nach einem Herstellungsverfahren gemäß einer der obigen Ausführungsformen. Gemäß unterschiedlichen bevorzugten Ausgestaltungen des additiven Herstellungsverfahrens wird das Bauteil aus Kunststoff oder aus Metall mit einem Lasersinter- oder einem Laserschmelzverfahren hergestellt. Derartige Herstellungsverfahren sind im Stand der Technik bekannt.

Außerdem offenbart vorliegende Erfindung eine Bauteilverbindung mit den folgenden Merkmalen: ein erstes additiv gefertigtes Bauteil mit einem Einsatzgewinde, insbesondere ein additiv gefertigtes Bauteil nach einem Herstellungsverfahren gemäß obiger Ausgestaltung, einen in dem Einsatzgewinde angeordneten Drahtgewindeeinsatz, ein zweites Bauteil mit einer Durchgangsöffnung und eine Schraube mit einem Kopf, einem Schaft und einem auf dem Schaft angeordneten Gewinde, wobei sich der Schaft durch die Durchgangsöffnung erstreckt und das Gewinde des Schafts mit dem ersten Bauteil über den im Einsatzgewinde angeordneten Drahtgewindeeinsatz verschraubt ist. Vorzugsweise weist das Gewinde auf dem Schaft der Schraube einen Nenndurchmesser d und das Einsatzgewinde einen Kerndurchmesser $D_{1HC}$ gemäß $D_{1HC} \geq d + 0{,}46 \times P$ auf, wobei ein Flankenwinkel $\alpha$ des Einsatzgewindes im Bereich von $80\,° > \alpha > 60\,°$ liegt.

4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:

Figur 1     eine Darstellung eines Standard-Innengewindes in einem Bauteil mit Geometriedaten,

Figur 2     eine Darstellung einer Schraube mit Schrauben- bzw. Außengewinde mit Geometrieangaben,

Figur 3     eine bevorzugte Ausführungsform eines additiv gefertigten Bauteils im Prozess der Herstellung mit einer Bauteilöffnung und einem Einsatzgewinde bzw. Innengewinde,

Figur 4     eine vergrößerte schematische Darstellung eines additiv gefertigten Gewindeausschnitts,

Figur 5     eine bevorzugte Ausführungsform eines Bauteilverbunds aus zwei Bauteilen mit einer Schraube, die in eine Bauteilöffnung eines additiv gefertigten Bauteils eingeschraubt ist, die ein Einsatzgewinde mit einem Drahtgewindeeinsatz aufweist,

Figur 6     eine bevorzugte Ausführungsform eines Bauteilverbunds aus zwei Bauteilen, in dem das additiv gefertigte Bauteil einen Gewindebolzen mit einem Einsatzgewinde als Außengewinde aufweist, auf dem ein Drahtgewindeeinsatz angeordnet und dann ein weibliches Gewindeelement aufgeschraubt ist,

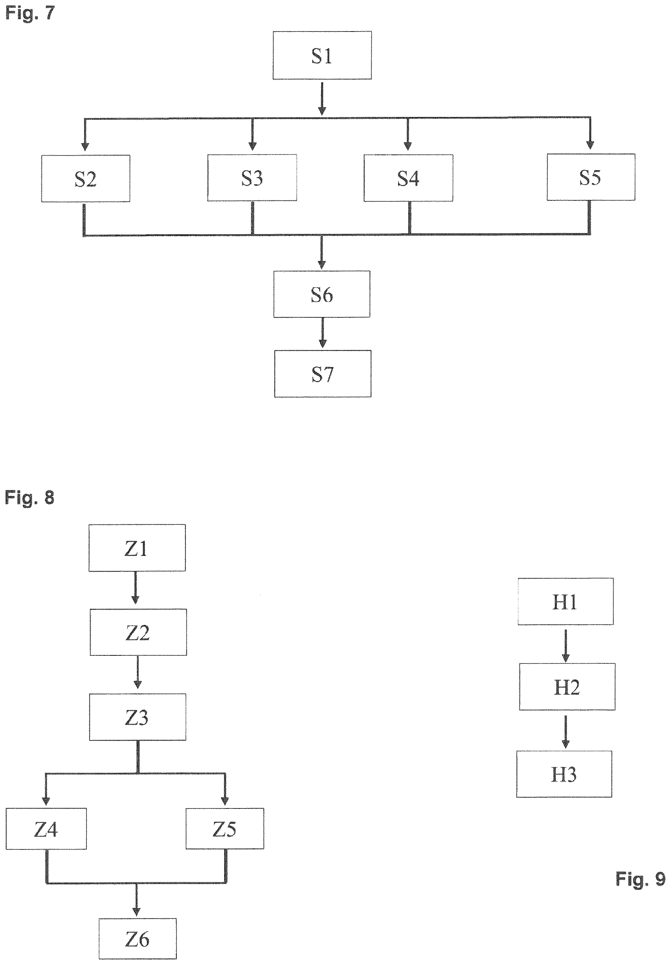

Figur 7     ein Flussdiagramm eines bevorzugten Herstellungsverfahrens,

Figur 8     ein Flussdiagramm eines weiteren bevorzugten Herstellungsverfahrens,

Figur 9     ein Flussdiagramm eines weiteren bevorzugten Herstellungsverfahrens.

5. Detaillierte Beschreibung der bevorzugten Ausführungsformen vorliegender Erfindung

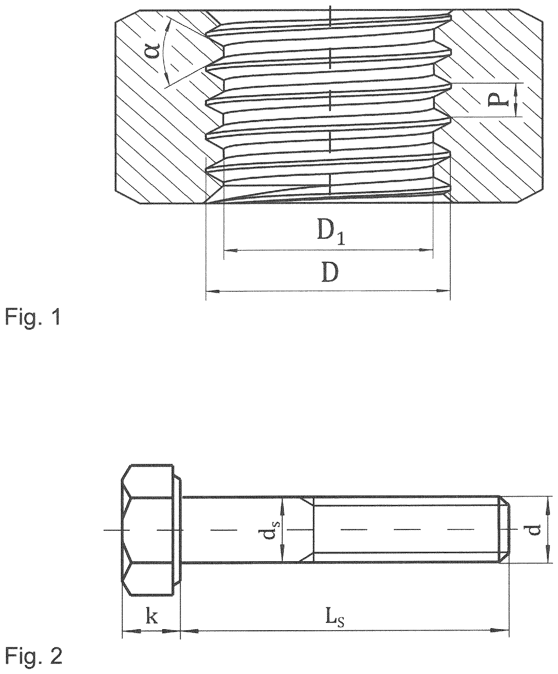

In der Konstruktion von Bauteilen 10 werden gleichermaßen weibliche Standardgewinde, also ein Innengewinde (siehe Figur 1), wie auch männliche Standardgewinde, also ein Außengewinde (siehe Figur 2), eingesetzt. Ein weibliches Standardgewinde bildet in bekannten Anwendungsfällen ein Innengewinde einer Mutter oder einer Bauteilöffnung. Ein männliches Standardgewinde bildet beispielsweise ein Außengewinde auf dem Schaft einer Schraube.

Die Lehrenhaltigkeit eines weiblichen und eines männlichen Standardgewinde wird durch den Nenndurchmesser $d$; $D$, den Kerndurchmesser $d_1$; $D_1$, die Steigung $P$ und den Flankenwinkel $\alpha$ bestimmt.

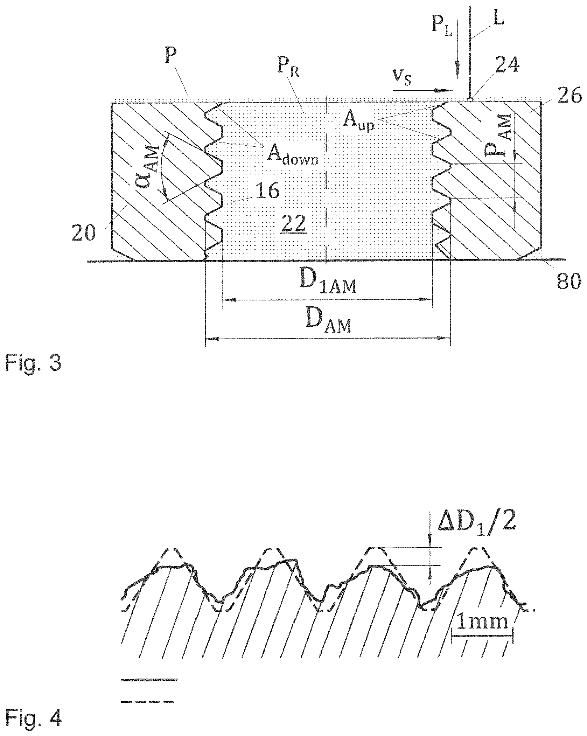

Ein Gewinde außerhalb von durch Standards festgelegten Toleranzen (beispielsweise ein metrisches Gewinde) führt dazu, dass eine Verschraubung nicht möglich oder nicht sicher ist. Wie in Figur 4 beispielgebend erläutert ist, weichen additive Fertigungsverfahren teilweise deutlich von einer Sollgewindekurve ab. In Figur 4 ist die Sollgewindekurve gestrichelt und die additiv gefertigte Gewindekurve durch eine durchgezogene Linie dargestellt. Um bei additiv gefertigten Bauteilen mit Gewinde, egal ob bei additiv gefertigten weiblichen oder männlichen Gewinden, ein lehrenhaltiges Standardgewinde ohne Nachbearbeitung zu erzielen, wird erfindungsgemäß bevorzugt ein Einsatzgewinde 16 additiv im/am Bauteil 10 gefertigt und mit einem Drahtgewindeeinsatz 30 kombiniert. Diese Kombination aus additivem Einsatzgewinde 16 und Drahtgewindeeinsatz 30 bildet das für eine Verbindung vorteilhafte Standardgewinde.

Als Ausgangsmaterial zur additiven Herstellung eines Bauteils mit Einsatzgewinde sind Kunststoffmaterialien bevorzugt. Zu diesen Materialien zählen beispielsweise Polyamid 11, Polyamid 12, Polyaryletherketone, PEEK, PA6X, Polypropylen, thermoplastische Elastomere und Polystyrol.

Des Weiteren werden bevorzugt metallische Werkstoffe zum additiven Lasersintern oder Laserschmelzen zur Bauteilherstellung verwendet. Vorzugsweise werden schweißbare metallische Werkstoffe mit einem Kohlenstoffäquivalent von ca. 0,2 bis 0,4 genutzt. Neben Stahl sind bevorzugt Aluminium-, Titan- und Nickelbasislegierungen (wie beispielsweise Inconel) als Grundwerkstoff bevorzugt.

Als additives Verfahren ist in diesem Zusammenhang das selektive Laserstrahl-Schmelzen bevorzugt.

An einen Werkstoff oder an eine Form des im Einsatzgewinde 16 angeordneten Drahtgewindeeinsatzes 30 werden keine Anforderungen gestellt. Vorzugsweise werden im Einsatzgewinde 16 bekannte Drahtgewindeeinsätze 30 verwendet. Vorzugsweise werden auch Drahtgewindeeinsätze 30 mit veränderten Querschnittsprofilen im Einsatzgewinde 16 einer Bauteilöffnung 12, also einer Gewindeöffnung oder eines männlichen Bauteils installiert. Dazu wird vorzugsweise der am additiv gefertigten Einsatzgewinde 16 anliegende Flankenwinkel des Drahtgewindeeinsatzes 30 vergrößert oder verkleinert. Auf diese Weise wird ebenfalls bevorzugt ein fester Sitz des Drahtgewindeeinsatzes 30 im Einsatzgewinde 16 realisiert, vorausgesetzt dass der Flankenwinkel des Einsatzgewindes 16 auch an den Flankenwinkel des Drahtgewindeeinsatzes 30 angepasst ist.

Zur Konstruktion eines additiv herzustellenden Bauteils 10 mit Bauteilöffnung 12 wird an einer Innenwand 14 der Bauteilöffnung 12 ein Einsatzgewinde 16 vorgesehen. Da das additive Herstellungsverfahren das Bauteil 10 dreidimensional in einer Schichtbauweise realisiert, wird das Bauteil 10 mit Bauteilöffnung 12 und Einsatzgewinde 16 in einem dreidimensionalen Modell konstruiert und mit gängigen Zeichenprogrammen, wie beispielsweise CAD, gezeichnet.

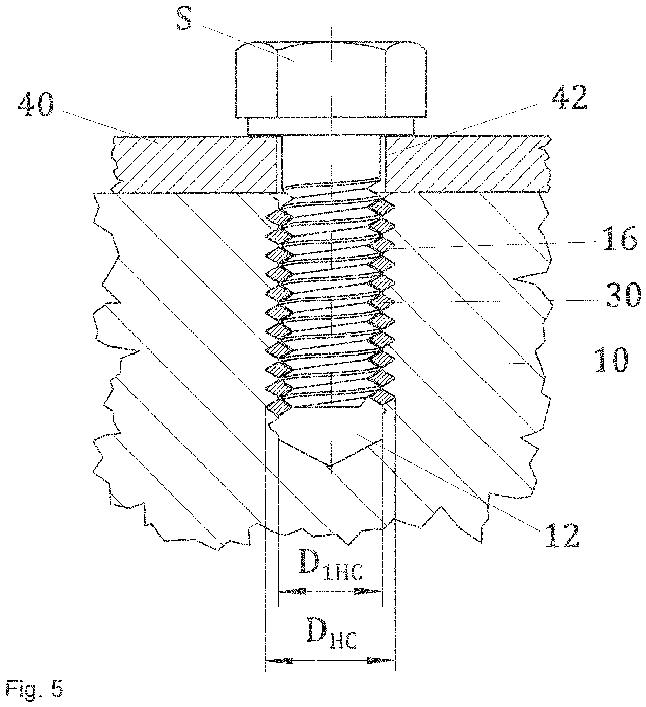

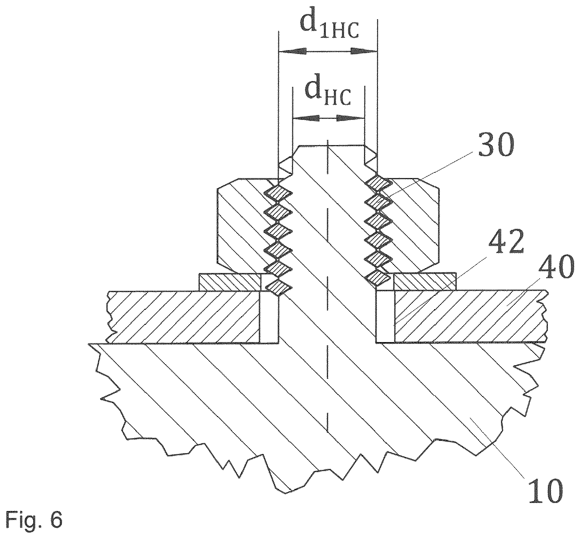

Die Geometrie des Einsatzgewindes 16 ist auf einen Drahtgewindeeinsatz 30 abgestimmt. Entsprechend entsteht aus einer Kombination von Einsatzgewinde 16 und Drahtgewindeeinsatz 30 ein Standardgewinde für weibliche Bauteile, also ein Innengewinde, (siehe Figur 5) oder männliche Bauteile, also ein Außengewinde, (siehe Figur 6).

Die Geometrie des Einsatzgewindes 16 ist in DIN 8140 mit Stand von September 2021definiert. Entsprechend gilt für die Geometrie des Einsatzgewindes 16 als Innengewinde

$$D_{HC} \geq d_{HC\,min} = D + 0{,}75 \times \frac{P}{\tan\left(\frac{\alpha}{2}\right)}$$

$$D_{1HC} \geq d_{1HC\,min} = D + 0{,}125 \times \frac{P}{\tan\left(\frac{\alpha}{2}\right)}$$

$$D_{1HC} \leq d_{1HC\,max} = D + 0{,}125 \times \frac{P}{\tan\left(\frac{\alpha}{2}\right)} + 0{,}373 \times P - 0{,}192 \times P^{1,21}$$

$$P_{HC} = (D_{HC\,min} - D_{1HC\,min}) \times 1{,}6 \times \tan\left(\frac{\alpha}{2}\right)$$

mit

| | |
|---|---|
| d | Nenndurchmesser des im Innengewinde aufzunehmenden Schraubengewindes |
| $\alpha$ | Flankenwinkel des im Innengewinde aufzunehmenden Schraubengewindes |
| P | Steigung des im Innengewinde aufzunehmenden Schraubengewindes |
| $D_{HC}$ | Nenndurchmesser des Einsatzgewindes |
| $D_{HC\,min}$ | kleinster Nenndurchmesser des Einsatzgewindes |
| $D_{1HC}$ | Kerndurchmesser des Einsatzgewindes |
| $D_{1HC\,min}$ | kleinster Kerndurchmesser des Einsatzgewindes |
| $D_{1HC\,max}$ | größter Kerndurchmesser des Einsatzgewindes |
| $P_{HC}$ | Steigung des Einsatzgewindes |

Durch das bevorzugte Anwenden der obigen Definition des Einsatzgewindes 16 als Innengewinde in der Bauteilöffnung 12 wird das Einsatzgewinde 16 für den Drahtgewindeeinsatz 30 um eine Drahtstärke des Drahtgewindeeinsatzes 30 radial größer. Während für den Drahtgewindeeinsatz 30 der Durchmesser des Einsatzgewindes 16 vergrößert wird, bleibt die Steigung $P_{HC}$ des Einsatzgewindes 16 gleich im Vergleich zu dem entsprechenden Standardgewinde einer in den aufzunehmende Drahtgewindeeinsatz 30 passenden Schraube, welches sich aus der Kombination von Einsatzgewinde 16 und Drahtgewindeeinsatz 30 ergibt.

Die obigen Formeln sind vorzugsweise gleichermaßen für aufzunehmende metrische Standardgewinde und aufzunehmende zöllige Standardgewinde als Außengewinde anwendbar. Zu diesem Zweck werden bei der Konstruktion von metrischen Einsatzgewinden 16 für den Nenndurchmesser d folgende Größen eingesetzt:

d=2; 2,5; 3; 3,5; 4; 4,5; 5; 6; 7; 8; 9; 10; 11; 12; 14; 16; 18; 20 [mm]

Bei der Konstruktion von einem zölligen Einsatzgewinde 16 wird vorzugsweise für den Nenndurchmesser d eingesetzt:

d= 0,086; 0,099; 0,112; 0,125; 0,138; 0,164; 0,19; 0,216; 0,25; 0,3125; 0,375; 0,4375; 0,5; 0,5625; 0,625; 0,75; 0,875 [inch]

Den bevorzugten Werten für den Nenndurchmesser d von aufzunehmenden metrischen Außengewinden sind basierend auf DIN13-1 bevorzugt folgende Steigungswerte P zugeordnet

P=0,45; 0,5; 0,6; 0,7; 0,75; 0,8; 1; 1,25; 1,5; 1,75; 2; 2,5; 3 [mm]

Die Steigung P wird als Abstand zwischen benachbarten Gewindezacken in Millimeter gemessen.

Für die Werte der metrischen Außengewinde gilt zudem bevorzugt der Flankenwinkel $\alpha$ von $\alpha = 60°$.

Den bevorzugten Werten für den Nenndurchmesser d von aufzunehmenden zölligen Außengewinden sind basierend auf dem Unified Thread Standard bevorzugt folgende Steigungswerte P zugeordnet:

P =0,017857; 0,020833; 0,025; 0,025; 0,03125; 0,03125; 0,041667; 0,041667; 0,05; 0,055556; 0,0625; 0,071428; 0,076923; 0,083333; 0,090909; 0,1; 0,111111 [inch]

Die Steigung P wird als Abstand zwischen benachbarten Gewindezacken in Inch gemessen.

Zudem gilt bevorzugt für zöllige Außengewinde $\alpha$ gleich $\alpha_{HC} = 60°$.

Um das additiv zu fertigende Einsatzgewinde 16 derart an das toleranzbehaftete additive Herstellungsverfahren anzupassen, dass sich vorzugsweise aus der Kombination von Einsatzgewindes 16 und Drahtgewindeeinsatz 30 im additiv gefertigten Bauteil 10 ein metrisches oder ein zölliges Standardgewinde als Innengewinde ergibt, werden vorzugsweise die geometrischen Daten Nenndurchmesser $D_{HC}$, Kerndurchmesser $D_{1HC}$, Flankenwinkel $\alpha_{HC}$ und Steigung P angepasst.

Anpassen bedeutet gemäß einer bevorzugten Ausführungsform vorliegender Erfindung, dass die genannten geometrischen Daten jeweils mit einem individuellen Korrekturfaktor $\delta, \delta_1, \delta_\alpha, \delta_P$ multipliziert werden, um einen additiven Nenndurchmesser $D_{AM}$, einen additiven Kerndurchmesser $D_{1AM}$, einen additiven Flankenwinkel $\alpha_{AM}$ und eine additive Steigung $P_{Am}$ zu ergeben.

Mathematisch ausgedrückt heißt das bevorzugt:

$$D_{AM} = d_{HC} * \delta$$

$$D_{1AM} = d_{1HC} * \delta_1$$

$$\alpha_{AM} = \alpha_{HC} * \delta_\alpha$$

$$P_{AM} = P_{HC} * \delta_P$$

wobei $\delta$, $\delta_1$, $\delta_\alpha$, $\delta_P$ entsprechend Korrekturfaktoren für den Nenndurchmesser, den Kerndurchmesser, den Flankenwinkel und die Steigung sind.

Erfindungsgemäß bevorzugt haben die genannten Korrekturfaktoren $\delta$ folgende Wertebereiche, die zum Ausgleich von Toleranzen bei der Herstellung des additiven Bauteils 10 genutzt werden:

| Korrekturfaktor: | Wertebereich: |
|:---:|:---:|
| $\delta$ | 1,04 - 1,25 |
| $\delta_1$ | 1,04 - 1,25 |
| $\delta_\alpha$ | 1,04 - 1,25 |
| $\delta_P$ | 1,04 - 1,25 |

Erfindungsgemäß bevorzugt sind die oben genannten Toleranzanpassungen für metrische Gewinde der Größe M2 bis M20 und für zöllige Gewinde von 2-7/8 Inch anwendbar.

Mit weiter steigendem Nenndurchmesser vergrößern sich auch die Toleranzen. Je nach Schichtstärke und Orientierung entsprechen die fertigungsbedingten Abweichungen ab einem bestimmten Nenndurchmesser den zulässigen Toleranzen.

Gemäß einer weiteren Alternative vorliegender Erfindung wird ein additives Herstellungsverfahren eines Bauteils 10 mit einer Bauteilöffnung 12 bereitgestellt. An der Innenwand 14 der Bauteilöffnung 12 ist als Innengewinde anstelle eines Standardgewindes für Schrauben S (siehe Figur 2) das Einsatzgewinde 16 für einen Drahtgewindeeinsatz 30 vorgesehen.

Ein bekanntes additives Verfahren zur Herstellung des Bauteils 10 aus Kunststoff- oder Metallpulver ist schematisch in Figur 3 zusammengefasst. Diese Darstellung gilt bevorzugt gleichermaßen auch für das oben beschriebene Herstellungsverfahren.

Auf einer Aufbauplattform (80) wird eine Schicht losen Pulvers P bereitgestellt. Ein Laserstrahl L strahlt mit einer auf das Material des Pulvers abgestimmten Laserleistung $P_L$ auf das Pulver P ein, um es zu verfestigen. Der Laserstrahl L bewegt sich mit einer Scangeschwindigkeit $v_S$ über die Pulverschicht P und bestrahlt die Bereiche, die zur Verfestigung durch das Schichtmodell der dreidimensionalen Bauteilzeichnung vorgegeben sind. Bezugnehmend auf Figur 3 entstehen dadurch verfestigte Bauteilbereiche 20 sowie Bereiche 22 mit losem oder unverfestigtem Pulver. Auf den verfestigten Bereichen 22 werden mit bekannten Technologien Mengen losen Pulvers 22 angeordnet, um diese durch den Laserstrahl zu verfestigen und dadurch das Bauteil 20 schichtweise weiter aufzubauen.

Das Bauteil 10 mit Bauteilöffnung 12 und Einsatzgewinde 16 als Innengewinde ist gemäß folgenden Formeln in der dreidimensionalen Bauteilzeichnung definiert:

$$D_{HC} \geq d_{HC\,min} = D + 0{,}75 \times \frac{P}{\tan\left(\frac{\alpha}{2}\right)}$$

$$D_{1HC} \geq d_{1HC\,min} = D + 0{,}125 \times \frac{P}{\tan\left(\frac{\alpha}{2}\right)}$$

$$D_{1HC} \leq d_{1HC\,max} = D + 0{,}125 \times \frac{P}{\tan\left(\frac{\alpha}{2}\right)} + 0{,}373 \times P - 0{,}192 \times P^{1,21}$$

$$P_{HC} = \left(D_{HC\,min} - D_{1HC\,min}\right) \times 1{,}6 \times \tan\left(\frac{\alpha}{2}\right)$$

mit

d        Nenndurchmesser des im Innengewinde aufzunehmenden Schraubengewindes

| a | Flankenwinkel des im Innengewinde aufzunehmenden Schraubengewindes |
|---|---|
| P | Steigung des im Innengewinde aufzunehmenden Schraubengewindes |
| $D_{HC}$ | Nenndurchmesser des Einsatzgewindes |
| $D_{HC\,min}$ | kleinster Nenndurchmesser des Einsatzgewindes |
| $D_{1HC}$ | Kerndurchmesser des Einsatzgewindes |
| $D_{1HC\,min}$ | kleinster Kerndurchmesser des Einsatzgewindes |
| $D_{1HC\,max}$ | größter Kerndurchmesser des Einsatzgewindes |
| $P_{HC}$ | Steigung des Einsatzgewindes |

Nachdem die dreidimensionale Bauteilzeichnung in ein Schichtmodell zur additiven Fertigung durch bekannte Software umgewandelt worden ist, wird das Bauteil anhand dieses Schichtmodells additiv hergestellt. Während der additiven Herstellung verfestigt der Laserstrahl L an einem Auftreffpunkt 24 das Pulver P, indem er mit einer bestimmten Streckenenergie Es einstrahlt. Die Streckenenergie Es berechnet sich aus

$$E_S = \frac{P_L}{V_s}$$

mit $E_S$ = Streckenenergie des Lasers, $P_L$ = Laserleistung und $v_S$ = Scangeschwindigkeit des Lasers.

Die bevorzugte Bauteilzeichnung, die dann auch als Schichtmodell erzeugt wird, gibt geometrische Bereiche und/oder Flächen des Bauteils 10 vor, die dem einfallenden Laserstrahl L zugewandt und die vom einfallenden Laserstrahl L abgewandt sind. Die dem Laserstrahl L zugewandten Flächen bezeichnet man als Upskin-Flächen $A_{up}$. Die dem Laserstrahl L abgewandten Flächen bezeichnet man als Downskin-Flächen $A_{down}$.

Im Bereich einer Downskin-Fläche $A_{down}$, die auch als untere Fläche eines Überhangs im Bauteil bezeichnet wird, wird das Bauteil 10 auf losem Pulver aufgebaut. Die über den Laserstrahl dem Pulver zugeführte Wärme wird dabei nicht über das darunterliegende erstarrte Pulver bzw. Material abgeführt. Vielmehr muss die Wärme über das Pulverbett bzw. das lose Pulver abgeführt werden, welches über einen niedrigeren Wärmeleitkoeffizienten verfügt als verfestigtes Pulver. Des Weiteren wird vorzugsweise zugeführte Wärme über das seitlich angrenzende Kernmaterial des Bauteils abgeführt. Da sich die zugeführte Wärme in diesen Bereichen stärker aufstaut als in anderen Bereichen, ist weniger Energie zum Aufschmelzen des Pulvers erforderlich. Bei unveränderter Energiezufuhr neigen die Überhänge zur Deformation. Dieser Effekt wird vorzugsweise bei der Gewindeformung ausgenutzt, indem die Downskin-Flächen $A_{down}$ des Einsatzgewindes 16 mit reduzierter Streckenenergie Es bearbeitet werden im Vergleich zu Upskin-Flächen $A_{up}$.

Benachbart zu den Downskin-Flächen $A_{down}$ sind die Upskin-Flächen $A_{up}$ vorgesehen. Dies wird bei der Konstruktion des Einsatzgewindes 16 in der Bauteilöffnung 12 gemäß Figur 3 deutlich.

Upskin-Fläche $A_{up}$ bezeichnet in diesem Zusammenhang die obere, zum Laserstrahl gerichtete Fläche eines additiv gefertigten Bauteils. Der Aufbau erfolgt auf bereits verfestigtem Material. Dadurch ist eine hohe Wärmeabfuhr aus der aufgeschmolzenen Materialzone über darunterliegendes aufgeschmolzenes und bereits erstarrtes Pulver- bzw. Kernmaterial gewährleistet. In Bezug auf das Einsatzgewinde 16 wird vorzugsweise die Streckenenergie bei der Bearbeitung der Upskin-Flächen $A_{up}$ auf das Streckenenergieniveau für blockartige Bereiche 26 oder sogar darüber hinaus erhöht.

In den bevorzugten additiven Herstellungsverfahren mit Anpassung der Streckenenergie Es des Lasers an ausgewählte Geometriebereiche werden aus der dreidimensionalen Bauteilzeichnung Geometriebereiche mit Upskin-Flächen $A_{up}$ und/oder mit Downskin-Flächen $A_{down}$ ausgewählt. Für ausgewählte Downskin-Flächen $A_{down}$ des bevorzugten Einsatzgewindes 16 wird vorzugsweise die Streckenenergie Es des Laserstrahls L reduziert. Die Reduktion der Streckenenergie Es erfolgt vorzugsweise im Vergleich zu Upskin-Flächen $A_{up}$ und/oder zu blockartigen Bereichen 26 des Bauteils 10, in denen keine Überhänge vorhanden sind.

Die Streckenenergie Es des Laserstrahls L bestimmt sich gemäß $E_S = \frac{P_L}{V_S}$ (siehe oben). Um die Streckenenergie Es des Laserstrahls L zu verringern, wird gemäß einer bevorzugten Ausführungsform vorliegende Erfindung die Laserleistung $P_L$ des Laserstrahls L reduziert.

Gemäß einer weiteren bevorzugten Ausgestaltung vorliegender Erfindung wird die Laserleistung $P_L$ für Downskin-Flächen $A_{down}$ mit einem Korrekturfaktor $\delta_L$ multipliziert. Der Korrekturfaktor $\delta_L$ hat vorzugsweise eine Größe im Bereich von $0{,}7 \leq \delta_L \leq 0{,}99$.

Gemäß einer weiteren bevorzugten Anpassung der Streckenenergie Es des Laserstrahls L wird die Scangeschwindigkeit $v_S$ des Laserstrahls L (siehe Figur 3) verändert. In Abhängigkeit von der Scangeschwindigkeit $v_S$, mit der sich der Laserstrahl L über das Pulver bewegt und am Auftreffpunkt 24 seine Energie in das Pulvermaterial einträgt, wird das Pulver verfestigt. Bewegt sich der Laserstrahl schneller, wird weniger Energie auf das Pulver übertragen, als würde sich der Laser langsamer bewegen.

Gemäß verschiedener Ausführungsformen vorliegender Erfindung ist es bevorzugt, die Anpassung der Laserleistung $P_L$ und die Anpassung der Scangeschwindigkeit $v_S$ des Laserstrahls L jeweils allein oder in Kombination vorzunehmen.

Daher ist es zum Aufbau von Downskin-Flächen $A_{down}$ bevorzugt, die Laserleistung $P_L$ mithilfe des obigen Korrekturfaktor $\delta_L$ anzupassen. Vorzugsweise wird ergänzend dazu die Scangeschwindigkeit vs des Laserstrahls L erhöht.

Die Anpassung der Laserleistung $P_L$ und der Scangeschwindigkeit $v_S$ erfolgt vorzugsweise im Vergleich zur Verfestigung von blockartigen Bereichen 26 des Bauteils 10.

Beispielgebend berechnet sich die Streckenenergie Es des Laserstrahls L mit realen Zahlen beispielsweise nach folgender Gleichung:

$$E_{S,down} = \frac{P_L \times \delta_L}{V_S} = \frac{270 \ [Ws] \times 0,7}{0,8 \ [m]} = 236,25 \ [\frac{J}{m}]$$

Die oben beschriebenen bevorzugten additiven Herstellungsverfahren werden mithilfe eines bekannten Lasersinter- oder Laserschmelzverfahrens mit Kunststoffpulver oder mit Metallpulver durchgeführt.

Zudem ist es bevorzugt, die oben beschriebenen additiven Herstellungsverfahren gemäß ihrer Ausführungsformen miteinander zu kombinieren. Das bedeutet, dass ergänzend zu einer geometrischen Anpassung des additiv hergestellten Einsatzgewindes im Bauteil auch eine energetische Anpassung während der Herstellung des additiv zu fertigenden Bauteils zu nutzen.

Nach der additiven Herstellung des Bauteils 10 mit Einsatzgewinde 16 wird ein Drahtgewindeeinsatz 30 in die Bauteilöffnung 12 eingedreht. Die Kombination aus Einsatzgewinde 16 im additiv hergestellten Bauteil 10 und eingedrehtem bzw. darin installiertem Drahtgewindeeinsatz 30 bildet vorzugsweise ein Standardgewinde, um ebenfalls bevorzugt einen Gewindebolzen in die Bauteilöffnung 12 mit Einsatzgewinde 16 und Drahtgewindeeinsatz 30 einzuschrauben.

Entsprechend stellt vorliegende Erfindung auch einen Bauteilverbund bereit, der aus einem ersten additiv gefertigten Bauteil 10 mit einem Einsatzgewinde 16, einem in dem Einsatzgewinde 16 installierten Drahtgewindeeinsatz 30 und einem zweiten Bauteil 40 mit einer Durchgangsöffnung 42 und einer diese beiden Bauteile verbindenden Schraube S besteht. Die Schraube S weist vorzugsweise einen Schraubenkopf und einen Schraubenschaft auf, wobei der Schraubenschaft sich durch die Durchgangsöffnung 42 des zweiten Bauteils 40 erstreckt und das Gewinde des Schraubenschafts mit dem ersten Bauteil 10 über den im Einsatzgewinde 16 angeordneten Drahtgewindeeinsatz 30 verschraubt ist.

Gemäß einer bevorzugten Ausgestaltung vorliegender Erfindung weist das Außengewinde auf dem Schaft der Schraube einen Nenndurchmesser d und das Einsatzgewinde 16 einen Kerndurchmesser $D_{1HC}$ gemäß $D_{1HC} \geq d + 0,46 \times P$ auf. Zudem ist bevorzugt für den Flankenwinkel $\alpha$ des Einsatzgewindes 16 ein Winkel im Bereich von $80° > \alpha > 60°$ vorgesehen.

6. Bezugszeichenliste

10      Bauteil
12      Bauteilöffnung, Gewindeöffnung
14      Innenwand der Bauteilöffnung
16      Einsatzgewinde
20      verfestigte Bauteilbereiche
22      Bereiche mit losem Pulver
24      Auftreffpunkt des Lasers
26      blockartige Bereiche des Bauteils
30      Drahtgewindeeinsatz
40      zweites Bauteil
42      Durchgangsöffnung
80      Aufbauplattform
S       Schraube
L       Laserstrahl
P       Pulverschicht

$v_S$ Scangeschwindigkeit des Lasers L
$P_R$ Restpulver

**Patentansprüche**

1. Ein additives Herstellungsverfahren eines Bauteils (10) mit einer Gewindeöffnung (12) und einem an deren radialer Innenwand (14) angeordneten Einsatzgewinde (16), welches an einen zu einer Gewindeverstärkung aufzunehmenden Drahtgewindeeinsatz (30) angepasst ist, um aus Einsatzgewinde (16) und Drahtgewindeeinsatz (30) ein Standardgewinde zu bilden, wobei das Herstellungsverfahren die folgenden Schritte aufweist:

   Bereitstellen einer dreidimensionalen Bauteilzeichnung mit der Gewindeöffnung (12) und dem darin angeordneten Einsatzgewinde (16) (S1), welches insbesondere definiert ist durch

   $$D_{HC} \geq D_{HC\,min} = d + 0,75 \times \frac{P}{\tan\left(\frac{\alpha}{2}\right)}$$

   $$D_{1HC} \geq D_{1HC\,min} = d + 0,125 \times \frac{P}{\tan\left(\frac{\alpha}{2}\right)}$$

   $$D_{1HC} \leq D_{1HC\,max} = d + 0,125 \times \frac{P}{\tan\left(\frac{\alpha}{2}\right)} + 0,373 \times P - 0,192 \times P^{1,21}$$

   $$P_{HC} = (D_{HC\,min} - D_{1HC\,min}) \times 1,6 \times \tan\left(\frac{\alpha}{2}\right)$$

   mit

   d Nenndurchmesser des im Einsatzgewinde mit Drahtgewindeeinsatz aufzunehmenden Schraubengewindes
   $\alpha$ Flankenwinkel des im Einsatzgewinde mit Drahtgewindeeinsatz aufzunehmenden Schraubengewindes
   P Steigung des im Einsatzgewinde mit Drahtgewindeeinsatz aufzunehmenden Schraubengewindes
   $D_{HC}$ Nenndurchmesser des Einsatzgewindes
   $D_{HC\,min}$ kleinster Nenndurchmesser des Einsatzgewindes
   $D_{1HC}$ Kerndurchmesser des Einsatzgewindes
   $D_{1HC\,min}$ kleinster Kerndurchmesser des Einsatzgewindes
   $D_{1HC\,max}$ größter Kerndurchmesser des Einsatzgewindes
   $P_{HC}$ Steigung des Einsatzgewindes

   Anpassen von Abmessungen des Einsatzgewindes (16) (S2, S3, S4) mit Hilfe von Korrekturfaktoren an die additive Herstellung,
   Umwandeln der dreidimensionalen Bauteilzeichnung mit den angepassten Abmessungen in ein Schichtmodell für die additive Herstellung (S5) und
   additives Herstellen des dreidimensionalen Bauteils (10) (S6).

2. Das Herstellungsverfahren gemäß Patentanspruch 1, in dem das Anpassen der Abmessungen des Einsatzgewindes (16) durch Aufweiten von zumindest einer der folgenden Größen erfolgt: der Nenndurchmesser $D_{HC}$ (S2), der Kerndurchmesser $D_{1HC}$, (S3) der Flankenwinkel $\alpha_{HC}$ (S4) und die Steigung $P_{HC}$ (S5).

3. Das Herstellungsverfahren gemäß Patentanspruch 1 oder 2, in dem das Anpassen des Nenndurchmessers $D_{HC}$ auf einen additiven Nenndurchmesser $D_{AM}$ (S2), das Anpassen des Kerndurchmessers $D_{1HC}$ auf einen additiven Kerndurchmesser $D_{1AM}$ (S3), das Anpassen des Flankenwinkels $\alpha_{HC}$ auf einen additiven Flankenwinkel $\alpha_{AM}$ (S4) und das Anpassen der Steigung $P_{HC}$ auf eine additive Steigung $P_{AM}$ (S5) auf Grundlage folgender Gleichungen erfolgt:

$$D_{AM} = D_{HC} * \delta$$

$$D_{1AM} = D_{1HC} * \delta_1$$

$$\alpha_{AM} = \alpha_{HC} * \delta_\alpha$$

$$P_{AM} = P_{HC} * \delta_P$$

wobei $\delta$, $\delta_1$, $\delta_\alpha$, $\delta_P$ entsprechend Korrekturfaktoren für den Nenndurchmesser, den Kerndurchmesser, den Flankenwinkel und die Steigung sind.

4. Das Herstellungsverfahren gemäß Patentanspruch 3, wobei die Korrekturfaktoren folgende Wertebereiche haben

| Korrekturfaktor: | Wertebereich: |
|---|---|
| $\delta$ | 1,04 - 1,25 |
| $\delta_1$ | 1,04 - 1,25 |
| $\delta_\alpha$ | 1,04 - 1,25 |
| $\delta_P$ | 1,04 - 1,25 |

5. Das Herstellungsverfahren gemäß zumindest einem der vorhergehenden Patentansprüche, wobei für metrische Gewinde mit $\alpha$=60 ° die obigen Gleichungen für d=2; 2,5; 3; 3,5; 4; 4,5; 5; 6; 7; 8; 9; 10; 11; 12; 14; 16; 18; 20 [mm] anwendbar sind.

6. Das Herstellungsverfahren gemäß Patentanspruch 5, wobei für metrische Gewinde mit $\alpha$=60 ° die obigen Gleichungen für P=0,45; 0,5; 0,6; 0,7; 0,75; 0,8; 1; 1,25; 1,5; 1,75; 2; 2,5; 3 [mm] anwendbar sind.

7. Das Herstellungsverfahren gemäß zumindest einem der vorhergehenden Patentansprüche 1 bis 4, wobei für zöllige Gewinde mit $\alpha$=60 ° die obigen Gleichungen für d= 0,086; 0,099; 0,112; 0,125; 0,138; 0,164; 0,19; 0,216; 0,25; 0,3125; 0,375; 0,4375; 0,5; 0,5625; 0,625; 0,75; 0,875 [inch] anwendbar sind.

8. Ein additives Herstellungsverfahren eines Bauteils (10) mit einer Gewindeöffnung (12) und einem an deren radialer Innenwand angeordneten Einsatzgewinde (16) , welches an einen zu einer Gewindeverstärkung aufzunehmenden Drahtgewindeeinsatz (30) angepasst ist, um aus Einsatzgewinde (16) und Drahtgewindeeinsatz (30) ein Standardgewinde zu bilden, wobei das Herstellungsverfahren die folgenden Schritte aufweist:

Bereitstellen einer dreidimensionalen Bauteilzeichnung mit der Gewindeöffnung (12) und dem darin angeordneten Einsatzgewinde (16) (Z1)
Auswählen von Geometriebereichen des Einsatzgewindes (16) in der Bauteilzeichnung (Z2), welches insbesondere definiert ist durch

$$D_{HC} \geq D_{HC\,min} = d + 0{,}75 \times \frac{P}{\tan\left(\frac{\alpha}{2}\right)}$$

$$D_{1HC} \geq D_{1HC\,min} = d + 0,125 \times \frac{P}{\tan\left(\frac{\alpha}{2}\right)}$$

$$D_{1HC} \leq D_{1HC\,max} = d + 0,125 \times \frac{P}{\tan\left(\frac{\alpha}{2}\right)} + 0,373 \times P - 0,192 \times P^{1,21}$$

$$P_{HC} = (D_{HC\,min} - D_{1HC\,min}) \times 1,6 \times \tan\left(\frac{\alpha}{2}\right)$$

mit

d Nenndurchmesser des im Einsatzgewinde mit Drahtgewindeeinsatz aufzunehmenden Schraubengewindes

$\alpha$ Flankenwinkel des im Einsatzgewinde mit Drahtgewindeeinsatz aufzunehmenden Schraubengewindes
P Steigung des im Einsatzgewinde mit Drahtgewindeeinsatz aufzunehmenden Schraubengewindes
$D_{HC}$ Nenndurchmesser des Einsatzgewindes
$D_{HC\,min}$ kleinster Nenndurchmesser des Einsatzgewindes
$D_{1HC}$ Kerndurchmesser des Einsatzgewindes
$D_{1HC\,min}$ kleinster Kerndurchmesser des Einsatzgewindes
$D_{1HC\,max}$ größter Kerndurchmesser des Einsatzgewindes
$P_{HC}$ Steigung des Einsatzgewindes

Umwandeln der dreidimensionalen Bauteilzeichnung mit den ausgewählten Geometriebereichen in ein Schichtmodell für die additive Herstellung (Z3) und

additives Herstellen des dreidimensionalen Bauteils (10) mit Einsatzgewinde (16) (Z6), insbesondere aus einer Aluminiumlegierung, wobei die ausgewählten Geometriebereiche des Einsatzgewindes (16) mit einer anderen Streckenenergie $E_S$ eines Lasers als die anderen Bereiche des Bauteils 10 aufgeschmolzen werden und sich die Streckenenergie $E_S$ des Lasers ergibt aus

$$E_S = \frac{P_L}{V_S}$$

mit $E_S$ = Streckenenergie des Lasers, $P_L$ = Laserleistung und $v_S$ = Scangeschwindigkeit des Lasers.

9. Das additive Herstellungsverfahren gemäß Patentanspruch 8, in dem der Laser in einer Einstrahlrichtung auf zu verfestigendes Material einstrahlt und welches den weiteren Schritt aufweist:

Auswählen von Downskin-Gewindeflächen des Einsatzgewindes (16) (Z2), die der Einstrahlrichtung abgewandt sind, und
Reduzieren der durch den Laser auf das zu verfestigende Pulver aufgebrachten Streckenenergie $E_S$ (Z4; Z5).

10. Das additive Herstellungsverfahren gemäß Patentanspruch 9, in dem weiteren Schritt:
Reduzieren der Streckenenergie $E_S$ des Lasers durch Reduzieren der Laserleistung $P_L$ (Z4) und/oder durch Erhöhen der Scangeschwindigkeit $v_S$ (Z5).

11. Das additive Herstellungsverfahren gemäß Patentanspruch 10, wobei die Streckenenergie $E_S$ des Lasers bei Downskin-Gewindeflächen des Einsatzgewindes (16) reduziert wird gemäß

$$E_{S,down} = \frac{P_L \times \delta_L}{V_S} \, ,$$

indem die Laserleistung $P_L$ mit Hilfe eines Korrekturfaktors von $0{,}7 \leq \delta_L \leq 0{,}99$ verändert wird.

12. Ein Herstellungsverfahren eines additiv gefertigten Bauteils (10) mit einem Drahtgewindeeinsatz (30), das die folgenden Schritte umfasst:

Bereitstellen eines additiv gefertigten Bauteils mit einem Einsatzgewinde (16) (H1) gemäß einem der vorhergehenden Patentansprüche, insbesondere mit $D_{1HC} \geq d + 0{,}46 \times P$, und
Eindrehen (H2) eines Drahtgewindeeinsatzes (30) in das Einsatzgewinde (16) des additiv gefertigten Bauteils (10), wodurch der Durchmesser des Drahtgewindeeinsatzes (30) reduziert wird im Vergleich zu einem nicht eingedrehten Zustand des Drahtgewindeeinsatzes.

13. Das Herstellungsverfahren gemäß Patentanspruch 12, mit dem weiteren Schritt:
Einschrauben (H3) einer Schraube S mit einem Nenndurchmesser d in eine Bauteilöffnung (12) des additiv gefertigten Bauteils (10) in den Drahtgewindeeinsatz (30) im Einsatzgewinde (16).

14. Ein additiv gefertigtes Bauteil (10) mit einer Bauteilöffnung (12) und einem an einer Innenwand der Bauteilöffnung (12) angeordneten Einsatzgewinde (16), in dem ein Drahtgewindeeinsatz (30) angeordnet ist, insbesondere ein additiv gefertigtes Bauteil (10) nach einem Herstellungsverfahren gemäß einem der Patentansprüche 1 bis 11.

15. Das Bauteil gemäß Patentanspruch 14, welches mit einem Lasersinter- oder einem Laserschmelzverfahren aus Kunststoff oder aus Metall hergestellt ist.

16. Eine Bauteilverbindung, die die folgenden Merkmale aufweist:

ein erstes additiv gefertigtes Bauteil (10) mit einem Einsatzgewinde (16) , insbesondere ein additiv gefertigtes Bauteil (10) nach einem Herstellungsverfahren gemäß einem der Patentansprüche 1 bis 11,
einen in dem Einsatzgewinde (16) angeordneten Drahtgewindeeinsatz (30),
ein zweites Bauteil (40) mit einer Durchgangsöffnung (42) und
eine Schraube S mit einem Kopf, einem Schaft und einem auf dem Schaft angeordneten Gewinde, wobei sich der Schaft durch die Durchgangsöffnung (42) erstreckt und das Gewinde des Schafts mit dem ersten Bauteil (10) über den im Einsatzgewinde (16) angeordneten Drahtgewindeeinsatz (30) verschraubt ist.

17. Die Bauteilverbindung gemäß Patentanspruch 16, in der das Gewinde auf dem Schaft der Schraube S einen Nenndurchmesser d und das Einsatzgewinde (16) einen Kerndurchmesser $D_{1HC}$ gemäß $D_{1HC} \geq d + 0{,}46 \times P$ aufweist, wobei insbesondere ein Flankenwinkel $\alpha$ des Einsatzgewindes (16) im Bereich von 80 °$> \alpha > 60$ ° liegt.


**Geänderte Patentansprüche gemäss Regel 137(2) EPÜ.**

1. Ein additives Herstellungsverfahren eines Bauteils (10) mit einer Gewindeöffnung (12) und einem an deren radialer Innenwand (14) angeordneten Einsatzgewinde (16), welches an einen zu einer Gewindeverstärkung aufzunehmenden Drahtgewindeeinsatz (30) angepasst ist, um aus Einsatzgewinde (16) und Drahtgewindeeinsatz (30) ein Standardgewinde zu bilden, wobei das Herstellungsverfahren die folgenden Schritte aufweist:

Bereitstellen einer dreidimensionalen Bauteilzeichnung mit der Gewindeöffnung (12) und dem darin angeordneten Einsatzgewinde (16) (S1), welches insbesondere definiert ist durch

$$D_{HC} \geq D_{HC\,min} = d + 0{,}75 \times \frac{P}{\tan\left(\frac{\alpha}{2}\right)}$$

$$D_{1HC} \geq D_{1HC\,min} = d + 0{,}125 \times \frac{P}{\tan\left(\frac{\alpha}{2}\right)}$$

$$D_{1HC} \leq D_{1HC\,max} = d + 0,125 \times \frac{P}{\tan\left(\frac{\alpha}{2}\right)} + 0,373 \times P - 0,192 \times P^{1,21}$$

$$P_{HC} = (D_{HC\,min} - D_{1HC\,min}) \times 1,6 \times \tan\left(\frac{\alpha}{2}\right)$$

mit

d Nenndurchmesser des im Einsatzgewinde mit Drahtgewindeeinsatz aufzunehmenden Schraubengewindes

$\alpha$ Flankenwinkel des im Einsatzgewinde mit Drahtgewindeeinsatz aufzunehmenden Schraubengewindes

P Steigung des im Einsatzgewinde mit Drahtgewindeeinsatz aufzunehmenden Schraubengewindes

$D_{HC}$ Nenndurchmesser des Einsatzgewindes

$D_{HC\,min}$ kleinster Nenndurchmesser des Einsatzgewindes

$D_{1HC}$ Kerndurchmesser des Einsatzgewindes

$D_{1HC\,min}$ kleinster Kerndurchmesser des Einsatzgewindes

$D_{1HC\,max}$ größter Kerndurchmesser des Einsatzgewindes

$P_{HC}$ Steigung des Einsatzgewindes

Anpassen von Abmessungen des Einsatzgewindes (16) (S2, S3, S4) mit Hilfe von Korrekturfaktoren an die additive Herstellung,

Umwandeln der dreidimensionalen Bauteilzeichnung mit den angepassten Abmessungen in ein Schichtmodell für die additive Herstellung (S5) und

additives Herstellen des dreidimensionalen Bauteils (10) (S6).

2. Das Herstellungsverfahren gemäß Patentanspruch 1, in dem das Anpassen der Abmessungen des Einsatzgewindes (16) durch Aufweiten von zumindest einer der folgenden Größen erfolgt: der Nenndurchmesser $D_{HC}$ (S2), der Kerndurchmesser $D_{1HC}$, (S3) der Flankenwinkel $\alpha_{HC}$ (S4) und die Steigung $P_{HC}$ (S5).

3. Das Herstellungsverfahren gemäß Patentanspruch 1 oder 2, in dem das Anpassen des Nenndurchmessers $D_{HC}$ auf einen additiven Nenndurchmesser $D_{AM}$ (S2), das Anpassen des Kerndurchmessers $D_{1HC}$ auf einen additiven Kerndurchmesser $D_{1AM}$ (S3), das Anpassen des Flankenwinkels $\alpha_{HC}$ auf einen additiven Flankenwinkel $\alpha_{AM}$ (S4) und das Anpassen der Steigung $P_{HC}$ auf eine additive Steigung $P_{AM}$ (S5) auf Grundlage folgender Gleichungen erfolgt:

$$D_{AM} = D_{HC} * \delta$$

$$D_{1AM} = D_{1HC} * \delta_1$$

$$\alpha_{AM} = \alpha_{HC} * \delta_\alpha$$

$$P_{AM} = P_{HC} * \delta_P$$

wobei $\delta$, $\delta_1$, $\delta_\alpha$, $\delta_P$ entsprechend Korrekturfaktoren für den Nenndurchmesser, den Kerndurchmesser, den Flankenwinkel und die Steigung sind.

4. Das Herstellungsverfahren gemäß Patentanspruch 3, wobei die Korrekturfaktoren folgende Wertebereiche haben

| Korrekturfaktor: | Wertebereich: |
|:---:|:---:|
| $\delta$ | 1,04-1,25 |
| $\delta_1$ | 1,04 - 1,25 |
| $\delta_\alpha$ | 1,04 - 1,25 |
| $\delta_P$ | 1,04 - 1,25 |

5. Das Herstellungsverfahren gemäß zumindest einem der vorhergehenden Patentansprüche, wobei für metrische Gewinde mit $\alpha$=60 ° die obigen Gleichungen für d=2; 2,5; 3; 3,5; 4; 4,5; 5; 6; 7; 8; 9; 10; 11; 12; 14; 16; 18; 20 [mm] anwendbar sind.

6. Das Herstellungsverfahren gemäß Patentanspruch 5, wobei für metrische Gewinde mit $\alpha$=60 ° die obigen Gleichungen für P=0,45; 0,5; 0,6; 0,7; 0,75; 0,8; 1; 1,25; 1,5; 1,75; 2; 2,5; 3 [mm] anwendbar sind.

7. Das Herstellungsverfahren gemäß zumindest einem der vorhergehenden Patentansprüche 1 bis 4, wobei für zöllige Gewinde mit $\alpha$=60 ° die obigen Gleichungen für d= 0,218; 0,251; 0,284; 0,318; 0,351; 0,417; 0,48; 0,549; 0,64; 0,7938; 0,953; 1,1112; 1,3; 1,4288; 1,588; 1,91; 2,223 [cm] (d= 0,086; 0,099; 0,112; 0,125; 0,138; 0,164; 0,19; 0,216; 0,25; 0,3125; 0,375; 0,4375; 0,5; 0,5625; 0,625; 0,75; 0,875 [inch]) anwendbar sind.

8. Ein additives Herstellungsverfahren eines Bauteils (10) mit einer Gewindeöffnung (12) und einem an deren radialer Innenwand angeordneten Einsatzgewinde (16), welches an einen zu einer Gewindeverstärkung aufzunehmenden Drahtgewindeeinsatz (30) angepasst ist, um aus Einsatzgewinde (16) und Drahtgewindeeinsatz (30) ein Standardgewinde zu bilden, wobei das Herstellungsverfahren die folgenden Schritte aufweist:

Bereitstellen einer dreidimensionalen Bauteilzeichnung mit der Gewindeöffnung (12) und dem darin angeordneten Einsatzgewinde (16) (Z1)
Auswählen von Geometriebereichen des Einsatzgewindes (16) in der Bauteilzeichnung (Z2), welches insbesondere definiert ist durch

$$D_{HC} \geq D_{HC\,min} = d + 0,75 \times \frac{P}{\tan\left(\frac{\alpha}{2}\right)}$$

$$D_{1HC} \geq D_{1HC\,min} = d + 0,125 \times \frac{P}{\tan\left(\frac{\alpha}{2}\right)}$$

$$D_{1HC} \leq D_{1HC\,max} = d + 0,125 \times \frac{P}{\tan\left(\frac{\alpha}{2}\right)} + 0,373 \times P - 0,192 \times P^{1,21}$$

$$P_{HC} = (D_{HC\,min} - D_{1HC\,min}) \times 1,6 \times \tan\left(\frac{\alpha}{2}\right)$$

mit

d Nenndurchmesser des im Einsatzgewinde mit Drahtgewindeeinsatz aufzunehmenden Schraubengewindes
$\alpha$ Flankenwinkel des im Einsatzgewinde mit Drahtgewindeeinsatz aufzunehmenden Schraubengewindes
P Steigung des im Einsatzgewinde mit Drahtgewindeeinsatz aufzunehmenden Schraubengewindes
$D_{HC}$ Nenndurchmesser des Einsatzgewindes
$D_{HC\,min}$ kleinster Nenndurchmesser des Einsatzgewindes

$D_{1HC}$ Kerndurchmesser des Einsatzgewindes
$D_{1HC\,min}$ kleinster Kerndurchmesser des Einsatzgewindes
$D_{1HC\,max}$ größter Kerndurchmesser des Einsatzgewindes
$P_{HC}$ Steigung des Einsatzgewindes

Umwandeln der dreidimensionalen Bauteilzeichnung mit den ausgewählten Geometriebereichen in ein Schichtmodell für die additive Herstellung (Z3) und

additives Herstellen des dreidimensionalen Bauteils (10) mit Einsatzgewinde (16) (Z6), insbesondere aus einer Aluminiumlegierung, wobei die ausgewählten Geometriebereiche des Einsatzgewindes (16) mit einer anderen Streckenenergie $E_S$ eines Lasers als die anderen Bereiche des Bauteils 10 aufgeschmolzen werden und sich die Streckenenergie $E_S$ des Lasers ergibt aus

$$E_S = \frac{P_L}{V_s}$$

mit *Es* = Streckenenergie des Lasers, $P_L$ = Laserleistung und $v_S$ = Scangeschwindigkeit des Lasers.

9. Das additive Herstellungsverfahren gemäß Patentanspruch 8, in dem der Laser in einer Einstrahlrichtung auf zu verfestigendes Material einstrahlt und welches den weiteren Schritt aufweist:

Auswählen von Downskin-Gewindeflächen des Einsatzgewindes (16) (Z2), die der Einstrahlrichtung abgewandt sind, und
Reduzieren der durch den Laser auf das zu verfestigende Pulver aufgebrachten Streckenenergie $E_S$ (Z4; Z5).

10. Das additive Herstellungsverfahren gemäß Patentanspruch 9, in dem weiteren Schritt:
Reduzieren der Streckenenergie $E_s$ des Lasers durch Reduzieren der Laserleistung $P_L$ (Z4) und/oder durch Erhöhen der Scangeschwindigkeit vs (Z5).

11. Das additive Herstellungsverfahren gemäß Patentanspruch 10, wobei die Streckenenergie $E_s$ des Lasers bei Downskin-Gewindeflächen des Einsatzgewindes (16) reduziert wird gemäß

$$E_{S,down} = \frac{P_L \times \delta_L}{V_s} \, ,$$

indem die Laserleistung $P_L$ mit Hilfe eines Korrekturfaktors von $0,7 \le \delta_L \le 0,99$ verändert wird.

12. Ein Herstellungsverfahren eines additiv gefertigten Bauteils (10) mit einem Drahtgewindeeinsatz (30), das die folgenden Schritte umfasst:

Bereitstellen eines additiv gefertigten Bauteils mit einem Einsatzgewinde (16) (H1) gemäß einem der vorhergehenden Patentansprüche, insbesondere mit $D_{1HC} \ge d + 0,46 \times P$, und
Eindrehen (H2) eines Drahtgewindeeinsatzes (30) in das Einsatzgewinde (16) des additiv gefertigten Bauteils (10), wodurch der Durchmesser des Drahtgewindeeinsatzes (30) reduziert wird im Vergleich zu einem nicht eingedrehten Zustand des Drahtgewindeeinsatzes.

13. Das Herstellungsverfahren gemäß Patentanspruch 12, mit dem weiteren Schritt:
Einschrauben (H3) einer Schraube S mit einem Nenndurchmesser d in eine Bauteilöffnung (12) des additiv gefertigten Bauteils (10) in den Drahtgewindeeinsatz (30) im Einsatzgewinde (16).

14. Ein additiv gefertigtes Bauteil (10) mit einer Bauteilöffnung (12) und einem an einer Innenwand der Bauteilöffnung (12) angeordneten Einsatzgewinde (16), in dem ein Drahtgewindeeinsatz (30) angeordnet ist, insbesondere ein additiv gefertigtes Bauteil (10) nach einem Herstellungsverfahren gemäß einem der Patentansprüche 1 bis 1 1.

15. Das Bauteil gemäß Patentanspruch 14, welches mit einem Lasersinter- oder einem Laserschmelzverfahren aus Kunststoff oder aus Metall hergestellt ist.

16. Eine Bauteilverbindung, die die folgenden Merkmale aufweist:

ein erstes additiv gefertigtes Bauteil (10) mit einem Einsatzgewinde (16) , insbesondere ein additiv gefertigtes Bauteil (10) nach einem Herstellungsverfahren gemäß einem der Patentansprüche 1 bis 11, einen in dem Einsatzgewinde (16) angeordneten Drahtgewindeeinsatz (30), ein zweites Bauteil (40) mit einer Durchgangsöffnung (42) und eine Schraube S mit einem Kopf, einem Schaft und einem auf dem Schaft angeordneten Gewinde, wobei sich der Schaft durch die Durchgangsöffnung (42) erstreckt und das Gewinde des Schafts mit dem ersten Bauteil (10) über den im Einsatzgewinde (16) angeordneten Drahtgewindeeinsatz (30) verschraubt ist.

17. Die Bauteilverbindung gemäß Patentanspruch 16, in der das Gewinde auf dem Schaft der Schraube S einen Nenndurchmesser d und das Einsatzgewinde (16) einen Kerndurchmesser $D_{1HC}$ gemäß $D_{1HC} \geq d + 0{,}46 \times P$ aufweist, wobei insbesondere ein Flankenwinkel $\alpha$ des Einsatzgewindes (16) im Bereich von 80 °$>\alpha>$60 ° liegt.

Fig. 1

Fig. 2

Fig. 3

Fig. 4

S

40

42

16

30

10

12

$D_{1HC}$

$D_{HC}$

Fig. 5

Fig. 6

Fig. 7

```
        ┌─────────┐
        │   S1    │
        └─────────┘
             │
    ┌────────┼────────┬────────┐
    ▼        ▼        ▼        ▼
┌──────┐ ┌──────┐ ┌──────┐ ┌──────┐
│  S2  │ │  S3  │ │  S4  │ │  S5  │
└──────┘ └──────┘ └──────┘ └──────┘
    └────────┼────────┴────────┘
             ▼
        ┌─────────┐
        │   S6    │
        └─────────┘
             │
             ▼
        ┌─────────┐
        │   S7    │
        └─────────┘
```

Fig. 8

```
    ┌─────────┐
    │   Z1    │
    └─────────┘
         │
         ▼
    ┌─────────┐
    │   Z2    │
    └─────────┘
         │
         ▼
    ┌─────────┐
    │   Z3    │
    └─────────┘
         │
    ┌────┴────┐
    ▼         ▼
┌──────┐  ┌──────┐
│  Z4  │  │  Z5  │
└──────┘  └──────┘
    └────┬────┘
         ▼
    ┌─────────┐
    │   Z6    │
    └─────────┘
```

```
    ┌─────────┐
    │   H1    │
    └─────────┘
         │
         ▼
    ┌─────────┐
    │   H2    │
    └─────────┘
         │
         ▼
    ┌─────────┐
    │   H3    │
    └─────────┘
```

Fig. 9

Europäisches
Patentamt

European
Patent Office

Office européen
des brevets

**EUROPÄISCHER RECHERCHENBERICHT**

Nummer der Anmeldung

EP 21 19 7566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 110 064 755 A (BEIJING INST SPACECRAFT SYSTEM ENGINEERING) 30. Juli 2019 (2019-07-30) * Abbildung 6 * | 1 | INV. B22F5/06 B22F10/36 B33Y10/00 B33Y50/02 |
| X | Cnc Kitchen: "HELICOIL , Threaded Insert or Embedded Nut in 3D Prints?", , 30. Mai 2020 (2020-05-30), XP055897227, Gefunden im Internet: URL:https://www.youtube.com/watch?v=2wRc1K bEAU8&t=378s [gefunden am 2022-03-03] | 1-7, 13-17 | B22F10/28 F16B37/12 B22F10/38 |
| A | * Passagen im Video von 0:15 bis 0:30, 2:50 bis 3:10, 10:37 bis 10:45 * | 8-12 | |
| X | Anonymous: "Thread reinforcement for 3-D printed workpieces", , 6. März 2021 (2021-03-06), XP055897313, Gefunden im Internet: URL:https://web.archive.org/web/2021030610 4547/https://threadingtoolsguide.com/en/bl og/thread-inserts-thread-armouring-for-3d- printing-models/ [gefunden am 2022-03-03] * Seiten 1-2 * | 1 | |
| A | CN 211 564 509 U (XIAN BRIGHT LASER TECH CO LTD) 25. September 2020 (2020-09-25) * das ganze Dokument * | 1-17 | |

RECHERCHIERTE SACHGEBIETE (IPC)

B22F
B33Y

Der vorliegende Recherchenbericht wurde für alle Patentansprüche erstellt

| Recherchenort | Abschlußdatum der Recherche | Prüfer |
|---|---|---|
| Den Haag | 4. März 2022 | Forestier, Gilles |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 19 7566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2022

| Im Recherchenbericht angeführtes Patentdokument | Datum der Veröffentlichung | Mitglied(er) der Patentfamilie | Datum der Veröffentlichung |
|---|---|---|---|
| CN 110064755 A | 30-07-2019 | KEINE | |
| CN 211564509 U | 25-09-2020 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017126624 A1
- EP 3225334 B1